Europäisches Patentamt

European Patent Office

Office européen des brevets

(19)

(11) Publication number: **0 313 258**
**A2**

# EUROPEAN PATENT APPLICATION

(12)

(21) Application number: **88309530.9**

(22) Date of filing: **12.10.88**

(51) Int. Cl.⁴: **C08K 3/30 , C08L 83/04**

(30) Priority: **20.10.87 GB 8724502**

(43) Date of publication of application:
**26.04.89 Bulletin 89/17**

(84) Designated Contracting States:
**DE FR GB IT NL**

(71) Applicant: **Perennator GmbH**
**Rheingaustrasse 38a/53**
**6200 Wiesbaden-Schierstein(DE)**

(72) Inventor: **Jonas, Reinhardt**
**Rosenweg 3**
**D-6270 Idstein 2(DE)**
Inventor: **Ulzheimer, Rudi**
**Pfahlgrabenstrasse 5**
**D-6270 Idstein-Eschenhahn(DE)**

(74) Representative: **Bullows, Michael**
**Dow Corning Limited Cardiff Road**
**Barry South Glamorgan CF6 7YL Wales(GB)**

(54) **Polysiloxane compositions.**

(57) The specification describes and claims a composition capable of cure when exposed to moisture of the atmosphere at ambient temperature comprising (A) a mixture and/or a reaction product of a polydiorganosiloxane having silicon-bonded hydroxyl groups with a compound having silicon-bonded acyloxy groups and (B) filler comprising precipitated barium sulphate comprising particles not more than 10% of which are less than 0.5 microns and not more than 10% of which are more than 2.0 microns. The barium sulphate provides not less than 40% by weight of the composition. Preferred barium sulphates have an average particle size of 1 micron and a particle size distribution thus

|   |   |   |
|---|---|---|
| < 5 | microns | 100%, |
| < 3 | microns | 99.8%, |
| < 2 | microns | 95%, |
| < 1 | micron | 50%, |
| and < 0.5 | micron | 6% |

EP 0 313 258 A2

# POLYSILOXANE COMPOSITIONS

This invention is concerned with polysiloxane compositions and is particularly concerned with sealant compositions.

Polysiloxane compositions curable by way of hydrolysis of silicon-bonded groups and condensation of the hydrolysed material with silicon-bonded groups to form siloxane linkages are known materials. It has been known for many years that compounds having silicon-bonded $\equiv$SiOAc groups (where Ac represents an acyl group, for example $OC.CH_3$), for example, hydrolyse in presence of atmospheric moisture to corresponding compounds having $\equiv$SiOH groups which may condense with compounds having for example $=$SiOH, $=$SiOAc or $\equiv$SiOR groups to yield $\equiv$SiOSi$\equiv$ linkages. The condensation reaction between $\equiv$SiOAc and $\equiv$SiOH groups is known to proceed readily at room or elevated temperature and may be enhanced by catalysts e.g. dibutyltin diacetate. This ability of compositions comprising silicon compounds including such groups to cure at normal ambient temperatures to produce elastomeric polysiloxane masses renders such compositions suitable for a variety of purposes including their use as adhesives and sealants. For example, the so-called acetoxy sealants widely employed in industry cure at ambient temperatures by way of hydrolysis of polysiloxanes having silicon-bonded acyloxy groups (herein referred to as acyloxypolysiloxanes).

Acyloxypolysiloxanes may be prepared by reaction of a polydiorganosiloxane having terminal siloxane units comprising a silicon-bonded hydroxyl group or a silicon-bonded alkoxy or alkoxyalkoxy group with a compound having silicon-bonded acyloxy groups e.g. an acyloxy silane of the formula

(i)     $R_{(4-m)}Si(OOCR')_m$

or an acyloxy siloxane e.g. of the formula

(ii)     $(R'COO)_nR_{(3-n)}SiOSiR_{(3-n)}(OOCR')_n$

in which the groups R are each a monovalent, optionally substituted hydrocarbon group, the groups R' are hydrogen atoms or monovalent hydrocarbon groups free of aliphatic multiple bonds, $\underline{m}$ has the value 2 or 3 and n has the value 1 or 2. When preparing an acetoxy sealant, the acyloxypolysiloxane may be prepared by mixing the compound having silicon-bonded acyloxy groups and the polysiloxane having silicon-bonded hydroxyl, alkoxy or alkoxyalkoxy groups during mixing of ingredients to provide the sealant, or may be produced in advance of admixture with other ingredients to provide the sealant. Although some cure occurs in presence of moisture present during manufacture of the sealant, it is not normally necessary to carry out any special steps to dry commercial grade ingredients employed. Compositions including the acyloxypolysiloxane generally are stored until required for use in hermetically sealed cartridges or drums. Due to the presence of water some cure may occur in the stored composition.

It is generally accepted that presence in acetoxy sealants of substantial amounts of finely divided fillers leads to cured seals having reduced elastomeric properties as compared with seals formed from sealants having a low filler content. Fillers proposed for use in acetoxy sealants include for example diatomaceous earth, silicas, crushed quartz, ground calcium carbonate, surface treated calcium carbonate, ground barium sulphate, metallic oxides e.g. titania, ferric oxide, zinc oxide and fibrous materials such as asbestos and glass. Of the proposed materials, the silicas are frequently used in practice. Calcium carbonate has a tendency to absorb water and is therefore less desirable in moisture curing systems. Calcium carbonates which have been surface treated to render them hydrophobic, e.g. with stearates, are generally more suitable fillers than untreated calcium carbonate in such systems. Even so, the carbonates are not particularly favoured fillers for acetoxy sealant due to the liberation of gas during cure of the composition, which gas may be trapped as localised bubbles in the composition as it cures. The resulting voids render the cured composition non-uniform in its physical properties e.g. elongation and modulus. The use of large proportions of carbonate filler (i.e. more than about 25% by weight of the composition) tends to lead to cured products of greater hardness, lower elongation at break and higher modulus. Ground barium sulphate is very attractive for moisture curing materials due to its constant low moisture content. However, its use results in compositions having high specific gravities and it therefore has not been favoured as a filler, especially for use in proportions of more than 30% by weight of the sealant composition. The silica fillers are generally advocated for acetoxy sealants for example fume silica, silica aerogels and precipitated silicas. These materials contain water or comprise particles having at least a minor amount of hydroxyl groups capable of reaction with the silicon-bonded acetoxy groups present. Use of these silica fillers therefore tends to lead to cured sealants which are highly crosslinked and which have a comparatively high modulus. The silica fillers are generally used in amounts of less than about 15% by weight of the composition.

The ability of acetoxy sealants based on acyloxypolysiloxanes and fillers to cure at ambient temperature and pressure to provide good quality moisture proof, moisture resistant, elastic seals has rendered these materials suitable for various tasks. However, the seals tend to have a higher modulus than is desired for some purposes. For example, there are national standard specifications relating to performance of sealing materials for window glazing and to performance of sealing materials for expansion joints each of which specifies among other requirements a modulus at 100% elongation of not greater than 0.4 MPa. Acetoxy sealant compositions heretofore available generally have been incapable of yielding elastomers which consistently satisfy all these specifications, especially if the composition has been stored for several months prior to use.

Attempts to provide moisture curable sealant compositions based on acyloxypolysiloxanes which have a more consistently acceptable low modulus of elasticity by omitting the usual silica filler, have been unsuccessful in that whilst moduli of the order of 0.4 MPa can be achieved, an undesirable change in other properties (e.g. elongation at break) also occurs. One may achieve some improvement by blending into the unfilled sealant composition a polydimethylsiloxane fluid as extender, but there is a tendency for the fluid to bleed from the composition after cure.

It is one of the objects of the present invention to provide a composition based on acyloxypolysiloxanes which is curable by exposure to moisture e.g. from the atmosphere, to provide an elastomer having an improved blend of properties.

Properties desirable in sealant compositions intended to be used as glazing sealants or as expansion joint sealants include among other things the ability to be applied at ambient temperature and to skin over and cure within an acceptable time period upon exposure to ambient conditions to provide a seal which has a substantially permanent flexibility and elasticity. It is also desirable that seals of similar consistency of performance are produced irrespective of the length of time during which the composition remains stored under proper conditions prior to use. These properties are reflected in a skin-over time of up to about 20 minutes, a modulus value at 100% elongation in the range 0.2 to 0.4 MPa, and an elongation at break in excess of 800% demonstrated by cured material formed from a composition cured shortly after manufacture and by cured material formed from composition packaged in hermetically sealed containers and aged at 50° C for seven weeks after manufacture. Desirably the cured material demonstrates an elongation at break in excess of 1000%. Desirably the cured material demonstrates a Shore A hardness of 10 to 30.

We have now found that a desirable blend of properties may be provided by a moisture curable composition based on acyloxypolysiloxanes comprising not less than 40% by weight of the composition of precipitated barium sulphate having particles of a size falling within a specific range.

The present invention provides in one of its aspects a composition capable of cure when exposed to moisture of the atmosphere at ambient temperature comprising (A) a mixture and/or a reaction product of a polydiorganosiloxane having silicon-bonded hydroxyl groups with a compound having silicon-bonded acyloxy groups and (B) filler, comprising precipitated barium sulphate comprising particles not more than 10% of which are less than 0.5 microns and not more than 10% of which are more than 2.0 microns, the particles having an average size of about 0.8 to 1.2 microns, in which composition the barium sulphate provides not less than 40% by weight of the composition.

In a composition according to the invention the mixture and/or reaction product (A) may be produced in any convenient manner. In one preferred method, an acyloxypolysiloxane is produced by mixing together a polysiloxane having terminal silicon-bonded hydroxyl groups with a stoichiometric excess of a crosslinking agent which is a silicon compound having silicon-bonded acyloxy groups. The polydiorganosiloxane having terminal silicon-bonded hydroxyl groups may be for example according to the general formula

(iii)    $HO(R''_2SiO)_pH$

in which each $R''$ represents a monovalent hydrocarbon group, a halogenated monovalent hydrocarbon group, a cyanoalkyl or other organic group unreactive with acyloxy groups or an organosilicon side chain and $p$ has a value such that the viscosity of the polymer is in the range $2 \times 10^3$ mm²/s to $3 \times 10^5$ mm²/s. The crosslinking agent may be for example a mixture of materials of the formulae

(i)    $R_{(4-m)}Si(OOCR')_m$    and

(ii)    $(R'COO)_nR_{(3-n)}SiOSiR_{(3-n)}(OOCR')_n$

in which the groups R are each a monovalent, optionally substituted hydrocarbon group, the groups $R'$ are hydrogen atoms or R groups, $m$ has the value 2 or 3 and $n$ has the value 1 or 2. The crosslinking agent may be used in stoichiometric excess and serve not only to react with all the silicon-bonded hydroxyl groups of the polysiloxane of formula (iii) to provide the desired acyloxypolysiloxane but also to scavenge moisture which may be present. The reaction preferably is carried out in substantial absence of water, but traces of water which can be eliminated by the excess silane are not harmful. When preparing a composition according to the invention it should not be overlooked that due to presence of the chosen filler,

3

at a certain stage of mixing, the mixture becomes extremely stiff before becoming suitably flowable. It is therefore necessary to employ a kneader mixer at this stage e.g. a Z blade mixer. Provided this is done there are no significant restrictions on methods which may be used to make compositions according to the invention.

In preparing a composition according to the invention the acyloxypolysiloxane is preferably prepared in presence of the filler, and such other additives as may be required in the composition for example pigment, condensation catalyst for examply dibutyltin dilaurate and plasticiser for example polydimethylsiloxane fluid. Adhesion promoters e.g. γ-glycidoxytriethoxy silane may be added to the composition if desired. The composition may be charged into moisture proof cartridges and stored until required for use.

In a composition according to the invention the barium sulphate filler is a precipitated material. It may be prepared, for example by mixing aqueous solutions of barium sulphide and sodium sulphate under controlled conditions in order to produce a precipitate of uniform particles of pigmentary fineness. The sodium sulphide is separated from the barium sulphate. Barium sulphate produced by this method is known as blanc fixe and is distinguished from other barium sulphate products principally in its purity, and the size and uniformity of the particles. It is important that the barium sulphate comprises particles not more than 10% of which are less than 0.5 microns and not more than 10% of which are more than 2 microns and that the particles have an average size of about 0.8 to 1.2 micron. The size of the particles may be determined for example by measuring the amount of powder which passes through sieves having apertures of the specified sizes. Preferably the barium sulphate has an average particle size of about 1 micron and a particle size distribution such that at least 95% of the particles pass through a 2 micron sieve. Preferably, the barium sulphate particles have a bulk density according to DIN 53194 of about 100 to 140ml/100g, more preferably about 130ml/100g. One suitable material for use in a composition according to the invention is that supplied at 1st June 1986 by "Sachtleben" Chemie GmbH of Duisburg as Blanc Fixe F, which has an average particle size of 1 micron and a particle size distribution thus

|     |         |         |        |
|-----|---------|---------|--------|
|     | < 5     | microns | 100%,  |
|     | < 3     | microns | 99.8%, |
|     | < 2     | microns | 95%,   |
|     | < 1     | micron  | 50%,   |
| and | < 0.5   | micron  | 6%,    |

and a bulk density of 130ml/100g. In contrast, we have been unable to produce an acetoxy sealant having the desired combination of properties using as the filler the commercially available ground barium sulphates i.e. those having an average particle size about 10 microns, or lithopone (a white pigment containing amounts of zinc sulphide and barium sulphate made by reaction of purified aqueous solutions of zinc sulphate and barium sulphide) or "blanc fixe micro" (a precipitated barium sulphate of average particle size of about 0.7 microns). It is also important to employ sufficient barium sulphate to realise the beneficial properties. If the barium sulphate provides less than 40% by weight of the composition, the required combination of elongation and modulus at 100% elongation, irrespective of the period during which the composition was stored before use, is not achieved. In compositions according to the invention which employ preferred acyloxypolysiloxanes, we may use up to about 65% of the preferred filler by weight of the composition, which is to say of the order of less than about 250% by weight of the polysiloxane having silicon-bonded hydroxyl groups employed in the preparation of the acetoxy sealant. We prefer to use the selected filler to provide about 55 to 60% by weight of the composition.

If desired, additional filler materials of the type usually employed in acetoxy sealants, e.g. silicas may also be included in a sealant composition according to the invention.

Compositions according to the present invention may be formulated which satisfy the stringent glazing sealant specifications of France (CEPTP, 1st class) and Germany (DIN 18545, Group E) in respect of modulus at 100% elongation and elongation at break.

There now follows a description of two sealant compositions according to the invention and illustrative thereof and of several comparative compositions incorporating other fillers.

In the examples hereinafter described, the improved combination of properties of the illustrative compositions is demonstrated by comparison of the performance of the illustrative compositions with performance of the comparative compositions in various standard tests for sealant compositions. All of the compositions used were of the so-called acetoxy sealant type and differed principally in the type and amount of filler employed.

The fillers employed were as follows.

Filler 1 was Blanc Fixe F, a precipitated barium sulphate, supplied by "Sachtleben" Chemie GmbH. Blanc Fixe F is characterised as having an average particle size of 1 micron and a particle size distribution thus

|  | | |
|---|---|---|
| | <5 microns | 100%, |
| | <3 microns | 99.8%, |
| | <2 microns | 95%, |
| | <1 micron | 50%, |
| and | <0.5 micron | 6%, |

and a bulk density of 130ml/100g.

Filler 2 was a calcium carbonate, Omya BLR 3, a ground chalk supplied by Omya GmbH. This material had an average particle size of about 5 microns and a particle size distribution thus

|  | | |
|---|---|---|
| | <10 microns | 92%, |
| | < 5 microns | 58%, |
| and | < 3 microns | 20%. |

Filler 3 was a fumed silica, HDKN20P, supplied by Wacker Chemie GmbH. This material had an average particle size of about 0.014 microns.

Filler 4 was a ground barium sulphate, C11, supplied by "Sachtleben" Chemie GmbH. This material had an average particle size of about 10 microns.

Filler 5 was a precipitated barium sulphate, Blanc Fixe Micro, supplied by "Sachtleben" Chemie GmbH. Blanc Fixe Micro is characterised as having an average particle size of about 0.7 microns and a particle size distribution such that about 90% or more of its particles are less than 1 micron, about 20% of its particles are less than 0.5 microns and the powder has a bulk density of about 110ml/100g.

Filler 6 was a precipitated barium sulphate, Blanc Fixe N, supplied by "Sachtleben" GmbH. Blanc Fixe N is characterised as having an average particle size of about 4 microns and a particle size distribution thus

|  | | |
|---|---|---|
| | <10 microns | 99.9%, |
| | < 5 microns | 90%, |
| | < 3 microns | 60%, |
| | < 2 microns | 35%, |
| | < 1 micron | 10%, |
| and | < 0.5 micron | 1%. |

Filler 7 was a Lithopone comprising 70% barium sulphate of average particle size 0.8 micron and 30% zinc sulphide of average particle size 0.3 micron.

Filler 8 was a Lithopone comprising 60% barium sulphate of average particle size 0.8 micron and 40% zinc sulphide of average particle size 0.3 micron.

Filler 9 was a Lithopone comprising 40% barium sulphate of average particle size 0.8 micron and 60% zinc sulphide of average particle size 0.3 micron.

Filler 10 was a barium sulphate, albarit, supplied by "Sachtleben" Chemie GmbH and having an average particle size of about 2 microns and a particle size distribution thus

|     |     |         |        |
|-----|-----|---------|--------|
|     | <12 | microns | 100%,  |
|     | <10 | microns | 99.5%, |
|     | < 8 | microns | 98%,   |
|     | < 6 | microns | 92%,   |
|     | < 4 | microns | 78%,   |
| and | < 2 | microns | 45%.   |

Filler 11 was BLP3, a treated ground chalk supplied by Omya GmbH. This material had an average particle size of about 5 microns and a particle size distribution thus

|     |     |         |      |
|-----|-----|---------|------|
|     | <10 | microns | 92%, |
|     | < 5 | microns | 58%, |
| and | < 3 | microns | 20%. |

Test samples of each of the compositions 2mm thick were prepared by extruding the composition from the moisture proof cartridge in which it had been stored and forming it into a sheet. The sheet was allowed to cure for 7 days at a temperature of about 23°C in an atmosphere having a relative humidity of 45% to provide a cured rubber sheet. Test samples were cut from the sheet.

The time elapsed between forming the sheet and the sheet having a surface skin was recorded as the "skin time" in minutes.

Hardness of the cured sample was measured in Shore A.

Elongation and modulus were determined with samples cut from the sheet in accordance with DIN 53504. In these tests elongation was measured by subjecting the sample to stretch and recording the length of the sample immediately before it snapped as a percentage of the initial length of the sample, and modulus was recorded as the force in MPa required to achieve 100% elongation of the sample.

Example 1

Compositions were made using materials in amounts by weight shown in Table I.

6

## TABLE I

| Material | Composition | | | |
|---|---|---|---|---|
| | Illustrative | | Comparative | |
| | 1 | A | B | C |
| Hydroxy-silicone | 29.5 | 52.3 | 30.9 | 30 |
| Crosslinker (acetoxy silicon compound) | 2 | 5.7 | 4 | 4 |
| Polydimethylsiloxane (200 to 1000 mm²/s) | 10.5 | 31 | 11 | .0 |
| Filler 1 | 58 | 0 | 0 | 0 |
| Filler 2 | 0 | 0 | 50 | 0 |
| Filler 3 | 0 | 11 | 4 | 3 |
| Filler 4 | 0 | 0 | 0 | 50 |
| Catalyst | 0.02 | 0.02 | 0.02 | 0.02 |

The hydroxy-silicone used was an $\alpha,\omega$ dimethylhydroxysilyl end-blocked polydimethylsiloxane having a viscosity of about 50,000 mm²/s.

The crosslinker used was a product of trichloroethyl silane and acetic acid comprising principally approximately 88% ethyltriacetoxy silane and 7% diethyltetraacetoxy disiloxane.

The catalyst used was dibutyltin diacetate.

The comparative compositions A, B and C were prepared by mixing the ingredients in a planetary mixer for a period of 30 minutes without external heating. Whilst the temperature of each mixture initially was about 23°C the temperature rose in each case to about 35°C during mixing. Illustrative composition 1 was made by mixing the hydroxy polymer, most of the polydimethylsiloxane and most of the filler in a Z blade mixer to provide a base part. A crosslinker paste was mixed up using the remainder of the ingredients i.e. the silane, silica, catalyst and the remainder of the filler and polydimethylsiloxane. The base part and crosslinker paste were mixed together in a static mixer to form the finished composition.

The compositions so made were filled into standard, impervious sealant cartridges, the cartridges sealed, and the products aged for 7 days at room temperature. Samples were then produced and tested as aforesaid. Results of the tests are given in Table II.

## TABLE II

| Property | Composition | | | |
|---|---|---|---|---|
| | First Illustrative | Comparative | | |
| | | A | B | C |
| Shore A | 18 | 12 | 40 | 25 |
| Skin Time | 15 | 8 | 8 | 25 |
| Elongation | >800 | 750 | 450 | 550 |
| 100% modulus | 0.35 | 0.3 | 0.7 | 0.35 |

As can be seen from Table II the illustrative composition demonstrated a low modulus at 100% elongation coupled with a comparatively low hardness, a high elongation at break and an acceptable skin time.

Example 2

Base parts for acetoxy sealant compositions were made by mixing in a kneader for one hour 29.5 parts of the hydroxy-silicone used in Example 1, 10.5 parts polydimethylsiloxane (viscosity 200 to 1000 mm²/s) and 58 parts of filler. Acetoxy sealants were made in a planetary mixer by mixing 1000 parts of each base part with 19.7 parts of the crosslinker used in Example 1 and 0.2 parts of dibutyltindiacetate as catalyst. Various of the Fillers were used in making these sealant compositions. Thus, a second illustrative composition was formed using Filler 1. Comparative sealant compositions D, E, F, G, H, I, J and K were formed using as filler Filler 5, Filler 6, Filler 7, Filler 8, Filler 9, Filler 10, Filler 4 and Filler 11 respectively. The compositions so made were charged into standard, impervious sealant cartridges and the cartridges sealed. Samples were produced from the cartridges after aging for 7 days at room temperature (about 23°C) and after aging for seven weeks at 50°C. The samples were tested as aforesaid. Results of the tests using sealant aged for 7 days at room temperature are given in Table III and results of the tests using sealant aged for seven weeks at 50°C are given in Table IV.

## TABLE III

| Property | Second Illus- trative | Composition | | | | | | | |
|---|---|---|---|---|---|---|---|---|---|
| | | Comparative | | | | | | | |
| | | D | E | F | G | H | I | J | K |
| Shore A | 12 | 17 | 15 | 22 | 19 | 21 | 16 | 12 | 16 |
| Elongation | 1300 | 270 | 550 | 390 | 600 | 700 | 520 | 400 | 520 |
| 100% modulus | 0.25 | 0.3 | 0.3 | 0.4 | 0.4 | 0.4 | 0.3 | 0.25 | 0.35 |

## TABLE IV

| Property | Second Illus- trative | Composition | | | | | | | |
|---|---|---|---|---|---|---|---|---|---|
| | | Comparative | | | | | | | |
| | | D | E | F | G | H | I | J | K |
| Shore A | 14 | 7 | 3 | 24 | 24 | 23 | 19 | 18 | a |
| Elongation | 1400 | 1600 | a | 500 | 700 | 800 | 500 | 400 | a |
| 100% modulus | 0.2 | 0.1 | a | 0.35 | 0.35 | 0.3 | 0.25 | 0.25 | a |

(a)  signifies not measurable

As can be seen from Table II the second illustrative sealant composition demonstrated low modulus at 100% elongation coupled with high elongation at break and a low hardness value. As can be seen from Table IV substantially similar properties are demonstrated by the illustrative composition used after seven weeks aging at 50°C. The combination of properties shown by the second illustrative composition, both using composition aged for 7 days at room temperature and using composition aged for seven weeks at 50°C, is consistent and markedly better than for any of the comparative compositions. It was noted that compositions E, F, I, J and K were somewhat flowable.

The results reported in Tables II, III and IV demonstrate the particle size and size distribution of the barium sulphate and the proportion of the material present are important in order to achieve the improved blend of properties desired.

## Claims

1. A composition capable of cure when exposed to moisture of the atmosphere at ambient temperature comprising (A) a mixture and/or a reaction product of a polydiorganosiloxane having silicon-bonded hydroxyl groups with a compound having silicon-bonded acyloxy groups and (B) filler comprising precipitated barium sulphate comprising particles not more than 10% of which are less than 0.5 microns and not more than 10% of which are more than 2.0 microns, the particles having an average size of about 0.8 to 1.2 microns, in which composition the barium sulphate provides not less than 40% by weight of the composition.

2. A composition according to Claim 1 wherein the barium sulphate has an average particle size of 1 micron and a particle size distribution thus

$$
\begin{array}{lll}
& < 5 \quad \text{microns} & 100\%, \\
& < 3 \quad \text{microns} & 99.8\%, \\
& < 2 \quad \text{microns} & 95\%, \\
& < 1 \quad \text{micron} & 50\%, \\
\text{and} & < 0.5 \; \text{micron} & 6\%
\end{array}
$$

3. A composition according to either of the preceding claims wherein the barium sulphate has a bulk density of about 130ml/100g.

4. A composition according to any one of the preceding claims wherein the material (A) is produced by mixing together a polydiorganosiloxane having terminal silicon-bonded hydroxyl groups with a stoichiometric excess of a compound having silicon-bonded acyloxy groups.

5. A composition according to Claim 4 wherein the compound having silicon-bonded acyloxy groups is a mixture of materials of the formulae

(i)     $R_{(4-m)}Si(OOCR')_m$ and

(ii)    $(R'COO)_nR_{(3-n)}SiOSiR_{(3-n)}(OOCR')_n$

in which the groups R are each a monovalent, optionally substituted hydrocarbon group, the groups R' are hydrogen atoms or monovalent hydrocarbon groups free of aliphatic multiple bonds, $\underline{m}$ has the value 2 or 3 and n has the value 1 or 2.

6. A composition according to either one of Claims 4 and 5 wherein the polydiorganosiloxane having terminal units comprising a silicon-bonded hydroxyl group has a viscosity from $2 \times 10^3$ mm²/s to $3 \times 10^5$ mm²/s and is according to the general formula

(iii)    $HO(R''_2SiO)_pH$

in which each $R''$ represents a monovalent hydrocarbon group, a halogenated monovalent hydrocarbon group, a cyanoalkyl or other organic group unreactive with acyloxy groups or an organosilicon side chain.